Europäisches Patentamt

**European Patent Office**

**Office européen des brevets**

(11) Numéro de publication: **0 197 598**
**B1**

(12) **FASCICULE DE BREVET EUROPEEN**

(45) Date de publication du fascicule du brevet: **04.07.90**

(51) Int. Cl.⁵: **H 04 N 5/232**

(21) Numéro de dépôt: **86200538.6**

(22) Date de dépôt: **01.04.86**

(54) **Procédé de focalisation automatique d'un appareil de prise de vue vidéo par analyse numérique des contours de l'image et caméra vidéo appropriée.**

(30) Priorité: **05.04.85 FR 8505264**

(43) Date de publication de la demande:
**15.10.86 Bulletin 86/42**

(45) Mention de la délivrance du brevet:
**04.07.90 Bulletin 90/27**

(84) Etats contractants désignés:
**BE DE FR GB IT**

(56) Documents cités:
**US-A-4 325 082**

**IEEE TRANSACTIONS ON CONSUMER
ELECTRONICS, vol. CE-29, no. 3, aou7t 1983,
pages 376-382, New York, US; KENTARO
HANMA et al.: "Novel technologies for
automatic focusing and white balancing of solid
state color video camera"**

(73) Titulaire: **TELECOMMUNICATIONS
RADIOELECTRIQUES ET TELEPHONIQUES
T.R.T.
88, rue Brillat Savarin
F-75013 Paris (FR)**
(84) **FR**

(73) Titulaire: **N.V. Philips' Gloeilampenfabrieken
Groenewoudseweg 1
NL-5621 BA Eindhoven (NL)**
(84) **BE DE GB IT**

(72) Inventeur: **Duvent, Jean-Louis Michel
SOCIETE CIVILE S.P.I.D. 209, rue de l'Université
F-75007 Paris (FR)**

(74) Mandataire: **Pinchon, Pierre et al
Société Civile S.P.I.D. 209 rue de l'Université
F-75007 Paris (FR)**

Courier Press, Leamington Spa, England.

**Description**

La présente invention concerne un procédé de focalisation automatique d'un appareil de prise de vue muni d'un objectif et fournissant une image numérique, et un caméra vidéo appropriée.

L'invention trouve une application particulièrement avantageuse pour tout type de caméra vidéo lorsque les conditions opérationnelles nécessitent des corrections fréquentes de focalisation, et notamment pour les caméras infra-rouge dont l'optique en Germanium a un indice, et donc une distance focale, variable avec la température.

Un dispositif de focalisation automatique pour caméra vidéo est décrit dans le brevet US—A—4 392 726. Dans ce dispositif connu de l'art antérieur, la surface photodétectrice de la caméra est amenée en permanence dans une position telle qu'un signal continu de détection, intégrant les composantes haute-fréquence de l'image, soit maintenu à une valeur maximale. Après échantillonnage, ledit signal de détection est différencié de façon analogique, puis le signal différencié résultant est comparé à un seuil. Cette opération a pour but de définir un point voisin du maximum du signal de détection par le point où le signal différencié échantillonné devient supérieur au seuil. Cependant, compte-tenu de l'échantillonnage et de la comparaison audit seuil, ce point ainsi déterminé ne coïncide pas exactement avec le zéro du signal différencié et n'est donc pas représentatif du maximum du signal de détection. Le dispositif connu prévoit alors des moyens qui permettent d'appliquer une correction ramenant la surface photosensible de la caméra de la position précédemment déterminée à la position donnant la valeur maximale du signal de détection.

Ce dispositif présente toutefois un certain nombre d'inconvénients. Il nécessite en effet une chaîne relativement complexe de traitement essentiellement analogique du signal vidéo d'entrée, comprenant filtrage, intégration, échantillonnage, différenciation, comparaison, etc. . ., toutes ces opérations ne suffisant d'ailleurs pas à fournir une commande de focalisation automatique tout à fait satisfaisante puisqu'il a fallu leur ajouter une opération de correction de l'erreur systématique induite par le dispositif lui-même. D'autre part, ce dispositif connu n'est efficace que se l'image comporte suffisamment de composantes haute-fréquence, ce qui n'est pas le cas lorsque la scène filmée nee présente que peu de détails.

Le but de la présente invention est de remédier à ces inconvénients en proposant un procédé de focalisation automatique plus simple et sans correction, reposant sur une analyse purement numérique des contours de l'image et qui, dans une première forme, donne de bons résultats pour des images riches en hautes fréquences, et, dans une deuxième forme, pour des images éventuellement moins détaillées.

En effet, selon une première forme de l'invention, un procédé de focalisation automatique d'un appareil de prise de vue muni d'un objectif et fournissant une image numérique, est notamment remarquable en ce qu'il consiste à analyser l'image, à l'intérieur d'une fenêtre, à l'aide d'au moins un opérateur numérique donnant, pour une trame, les valeurs de la dérivée première spatiale, dites valeurs, dans une direction donnée, du signal numérique de l'image, puis à prendre les valeurs absolues de ces dérivées premières, et, enfin, à calculer un paramètre de qualité défini par la somme, dans ladite fenêtre, desdites valeurs absolues des dérivées premières, et en ce qu'on commande par asservissement la position de l'objectif de l'appareil de prise de vue de façon à obtenir la valeur maximale dudit paramètre de qualité.

Comme on le verra plus loin, ce paramètre de qualité correspond à la somme, dans la fenêtre, des valeurs crête à crête des fluctuations du signal vidéo. Ce type de paramètre est donc bien adapté au cas d'images contenant suffisamment de hautes fréquences. Par contre, il est moins efficace lorsque les objets de la scène offrent peu de fluctuations. On a alors recours à une deuxième forme de l'invention qui décrit un procédé de focalisation automatique d'un appareil de prise de vue muni d'un objectif et fournissant une image numérique, remarquable en ce qu'il consiste à analyser l'image, à l'intérieur d'une fenêtre, à l'aide d'au moins un opérateur numérique donnant, pour une trame, les dérivées, dites dérivées premières, dans une direction donnée, des contours de l'image, puis à prendre les valeurs absolues de ces dérivées premières, et, ensuite, à calculer, à l'intérieur de la même fenêtre et à l'aide du même opérateur numérique, les dérivées, dites dérivées secondaires, desdites valeurs absolues des dérivées premières et à en prendre les valeurs absolues, et, enfin, à calculer un paramètre de qualité défini par la somme, dans ladite fenêtre, des valeurs absolues des dérivées secondaires, et en ce qu'on commande par asservissement la position de l'objectif de l'appareil de prise de vue de façon à obtenir la valeur maximale dudit paramètre de qualité.

Cette deuxième forme de l'invention consiste donc à effectuer une deuxième fois le traitement décrit dans la première forme, elle conduit à déterminer un deuxième paramètre de qualité qui est égal à la somme des valeurs crête à crête des fluctuations des dérivées premières du signal vidéo. Ce deuxième paramètre de qualité est représentatif de la pente des contours de l'image, et donc est significatif de la qualité de la focalisation.

Dans un mode de réalisation particulier de l'invention, ledit opérateur numérique est un opérateur de dérivation horizontale appliqué le long d'une ligne de la trame, donnant les dérivées des contours de l'image dans le sens des lignes. De même, dans un autre mode de réalisation, les dérivées des contours dans une direction perpendiculaire aux lignes sont obtenues lorsque ledit opérateur numérique est un opérateur de dérivation verticale appliqué perpendiculairement à une ligne de la trame. Cependant, un mode de réalisation préféré prévoit qu'un opérateur numérique de dérivation horizontale et un opérateur numérique de dérivation verticale sont simultanément appliqués à l'image, à l'intérieur de ladite fenêtre. En effet, ce traitement bidimensionnel rend le paramètre de qualité, quel qu'il soit, peu sensible aux rotations de l'image.

Enfin, de façon à éliminer une partie des fausses alarmes liées au bruit affectant les données d'entrée, on peut envisager que les valeurs absolues des dérivées premières et secondaires sont comparées à des seuils respectifs, avec conservation des valeurs absolues desdites dérivées lorsqu'elles dépassent lesdits seuils. Cette disposition peut, en outre, augmenter le rapport signal à bruit, lequel est encore amélioré du fait que le procédé selon l'invention consiste à sommer les valeurs absolues des dérivées sur toute la fenêtre de mesure.

La description qui va suivre, en regard des dessins annexés donnés à titre d'exemples non limitatifs, fera bien comprendre en quoi consiste l'invention et comment elle peut être réalisée.

La figue 1, limitée aux blocs reliés entre eux par des traits pleins, est un schéma synoptique d'une première forme du procédé de focalisation automatique selon l'invention.

La figure 2, constituée par la figure 1 et les blocs reliés entre eux par des traits discontinus, est un schéma synoptique d'une deuxième forme du procédé selon l'invention.

Les figures 3 et 4 sont des exemples d'application à des contours particuliers des paramètres de qualité défini selon l'invention.

Les figures 5 et 6 donnent des exmples d'opérateurs numériques permettant de calculer les dérivées premières et secondaires des contours de l'image donné par un appareil de prise de vue.

La figure 7 est un bloc diagramme des différentes opérations conduisant à la détermination des paramètres de qualité.

Les figures 8a et 8b montrent les fonctions de transfert et les spectres des signaux respectivement dans le cas d'une focalisation idéale et d'un défaut de focalisation.

Les figures 9a et 9b donnent respectivement les variations du paramètre de qualité et de sa dérivée en fonction de la position de l'objectif de l'appareil de prise de vue.

La figure 10 donne le schéma d'un circuit d'asservissement linéaire mettant en oeuvre le procédé de focalisation automatique selon l'invention.

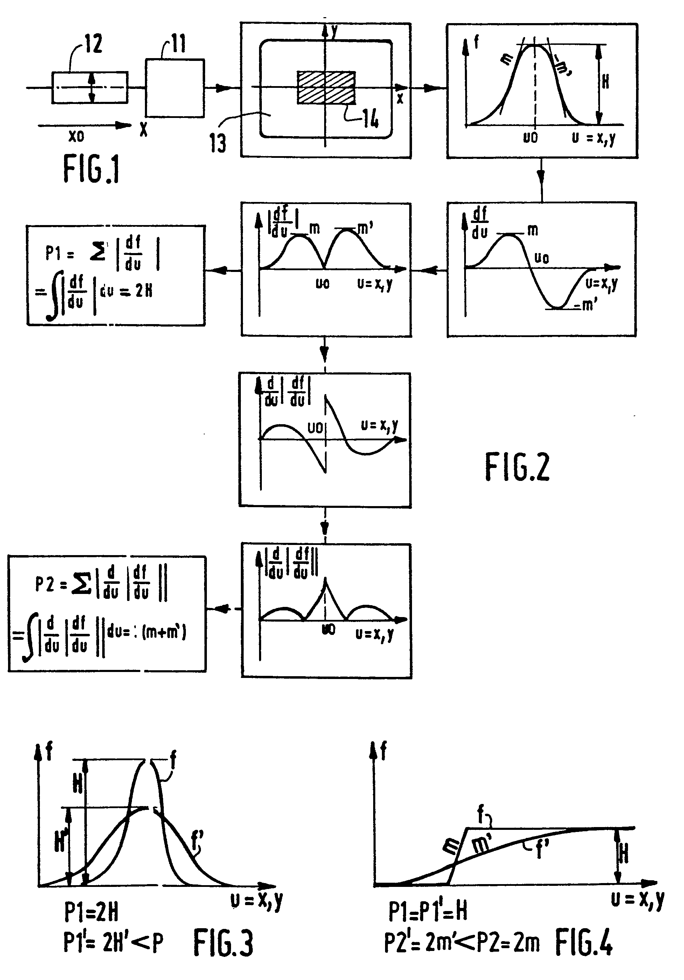

La figure 1 représente schématiquement les différentes étapes d'un procédé de focalisation automatique d'un appareil 11 de prise de vue muni d'un objectif 12 et fournissant une image numérique 13. Ce procédé consiste à analyser l'image 12, à l'intérieur d'une fenêtre 14, centrée par exemple au milieu de l'image, à l'aide d'au moins un opérateur numérique donnant, pour une trame, les dérivées

$$\frac{df}{du},$$

dites dérivées premières, dans une direction u donnée (u étant égal à x ou y, par exemple), des contours f de l'image 13. La figure 1 montre un contour f présentant un maximum H et deux flancs dont les pentes maximales respectives valent m et $-m'$, avec $m' > 0$. La courbe

$$\frac{df}{du}$$

correspondante est une courbe en S dont les extrèma sont m et $-m'$. Selon le procédé montré à la figure 1, on prend les valeurs absolues

$$\left| \frac{df}{du} \right|$$

de ces dérivées premières et on calcule un paramètre de qualité P1 défini par la somme, dans ladite fenêtre 14, desdites valeurs absolues des dérivées premières:

$$P1 = \sum \left| \frac{df}{du} \right|$$

Ce paramètre de qualité P1 est équivalent à l'intégrale dans la fenêtre 14 de la fonction

$$\left| \frac{df}{du} \right| : \quad P1 = \int \left| \frac{df}{du} \right| \, du, \text{ qui vaut}$$

$$\int_0^{uo} \frac{df}{du} \, du + \int_{uo}^{\infty} - \frac{df}{du} \, du = \left[ f \right]_0^{uo} - \left[ f \right]_{uo}^{\infty} = 2H,$$

$$P1 = 2H$$

Le paramètre de qualité P1 est donc égal, et ceci d'une façon générale, à la somme des valeurs crête à crête des fluctuations du signal vidéo. Ce paramètre est bien représentatif de la focalisation lorsque précisément un défaut de focalisation se traduit par une diminution des valeurs crête à crête des fluctuations du signal, c'est à dire lorsque les images contiennent beaucoup de hautes fréquences. La figure 3 donne un exemple d'une telle situation: la courbe f est celle d'un contour bien focalisé, le paramètre de qualité P1 correspondant est P1 = 2H. La courbe f' représente le même contour mais défocalisé, l'effet de la défocalisation est à la fois d'étaler le contour et d'en diminuer la valeur crête qui passe de H à H' < H, le paramètre de qualité P1' associé à f' est P1' = 2H' < P1. Il est cependant d'autres cas où le paramètre P1 ne peut être utilisé car insensible à la défocalisation, ainsi que le montre la figure 4. Cette figure montre un contour f correctement focalisé, du type front montant de hauteur H. La courbe f' est le résultat d'un défaut de focalisation sur la courbe f. La pente du front montant est moins grande, mais si la défocalisation n'est pas trop importante le maximum de la courbe f' vaut également H. Les deux paramètres de qualité P1 et P1' associés respectivement à f et f' sont égaux à H. le paramètre P1 tel que défini plus haut ne convient donc plus. Il est alors préférable de recourir à une deuxième forme de l'invention conduisant à la définition d'un autre paramètre de qualité mieux adapté aux images contenant peu de hautes fréquences.

Cette deuxième forme de l'invention est schématisée sur la figure 2, et consiste en fait à reproduire une deuxième fois le traitement précédemment décrit. A partir des valeurs absolues

$$\left| \frac{df}{du} \right|$$

des dérivées premières, on calcule, à l'intérieur de la même fenêtre 14 et à l'aide du même opérateur numérique qui a servi à calculer les dérivées premières les dérivées

$$\frac{d}{du} \left| \frac{df}{du} \right| \; ,$$

dites dérivées secondaires, desdites valeurs absolues des dérivées premières et à en prendre les valeurs absolues. On calcule ensuite un paramètre de qualité P2 défini par la somme, dans ladite fenêtre, des valeurs absolues des dérivées secondaires:

$$P2 = \sum \left| \frac{d}{du} \left| \frac{df}{du} \right| \right|$$

Ce paramètre de qualité P2 équivaut à l'intégrale dans la fenêtre 14 de la fonction

$$\left| \frac{d}{du} \left| \frac{df}{du} \right| \right| =$$

$$P2 = \int \left| \frac{d}{du} \left| \frac{df}{du} \right| \right| du$$

Dans l'exemple de la figure 2:

$$P2 = 2(m + m')$$

Le paramètre de qualité P2 est égal à la somme des valeurs crête des fluctuations des dérivées premières du signal vidéo.

Revenant au cas de la figure 4, on trouve que les paramètres de qualité P2 et P2' correspondant respectivement aux courbes f et f' valent 2m et 2m', et donc que P2 > P2', ce qui montre que le deuxième paramètre de qualité P2 est bien significatif de la qualité de la focalisation.

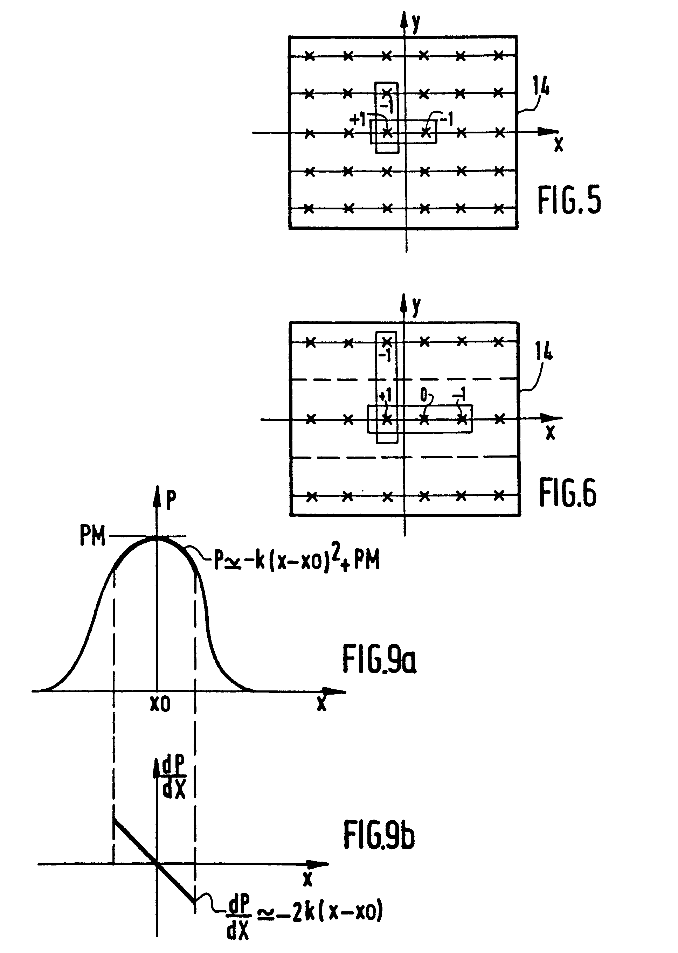

Comme le montre la figure 5, ledit opérateur numérique peut être un opérateur de dérivation horizontale [+1, −1] appliqué le long d'une ligne x de la trame, ou un opérateur de dérivation verticale

$$\begin{bmatrix} -1 \\ +1 \end{bmatrix}$$

appliqué perpendiculairement, dans une direction y, à une ligne de la trame.

Dans le cas où les lignes sont entrelacées eet où on ne dispose que d'une ligne sur deux, ainsi que l'indique la figure 6, ledit opérateur numérique est un opérateur de dérivation horizontale [+1, 0, −1] appliqué le long d'une ligne x de la trame, de façon à établir une symétrie dans l'action des opérateurs de dérivation horizontale et verticale lorsque ceux-ci sont appliqués simultanément à l'image, à l'intérieur de la fenêtre 14. Ce mode de réalisation doit être préféré à celui mettant en oeuvre un seul opérateur de dérivation unidimensionnel car il assure une certaine invariance des paramètres de qualité par rapport aux rotations de l'image.

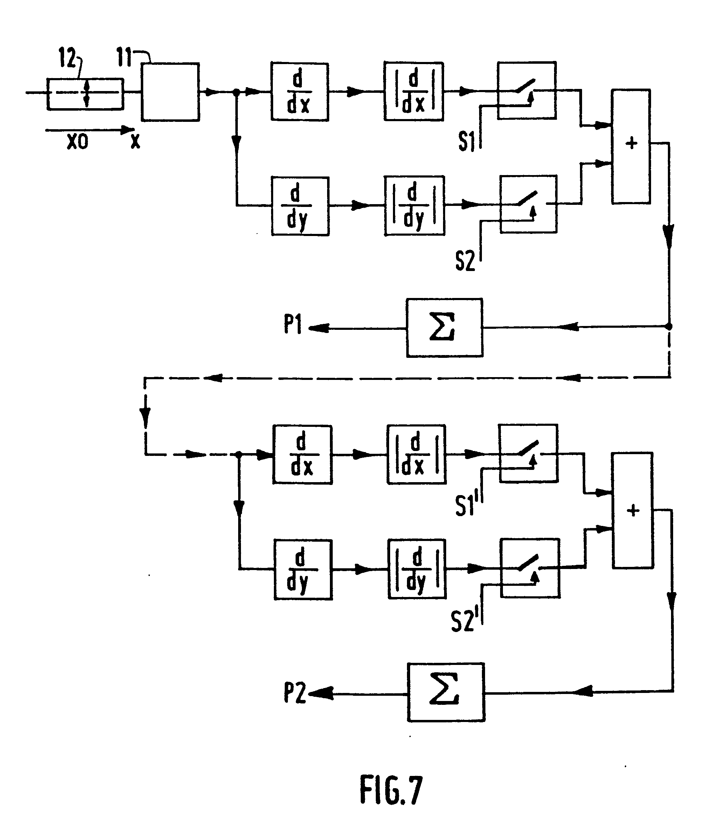

La figure 7 montre sous la forme de blocs-diagramme l'ensemble des opérations conduisant à la détermination de l'un ou l'autre des paramètres de qualité P1 et P2. Comme on peut le voir à la figure 7, il est prévu que les valeurs absolues

$$\left| \frac{df}{du} \right| et \left| \frac{d}{du} \right| \left\| \frac{df}{du} \right\|$$

des dérivées premières et secondaires sont comparées à des seuils respectifs S1, S2, S1', S2', avec conservation des valeurs absolues desdites dérivées lorsqu'elles dépassent lesdits seuils. Les valeurs des seuils S1, S2, S1', S2' peuvent être ajustées de façon à ne laisser passer les valeurs absolues des dérivées dues au signal avec un taux de fausse alarme lié à la statistique du bruit et à la méthode d'extraction des dérivées. Par exemple, en supposant que le bruit est gaussien et blanc, en appliquant comme dérivée horizontale l'opérateur [+1, 0, −1] et comme dérivée verticale l'opérateur

$$\begin{bmatrix} -1 \\ +1 \end{bmatrix}$$

dans la trame, ce qui correspond à

$$\begin{bmatrix} -1 \\ 0 \\ +1 \end{bmatrix}$$

dans l'image, on peut calculer que l'écart-type du bruit de chaque dérivée est $\sigma\sqrt{2}$, avec $\sigma$ égal à l'écart-type du bruit.

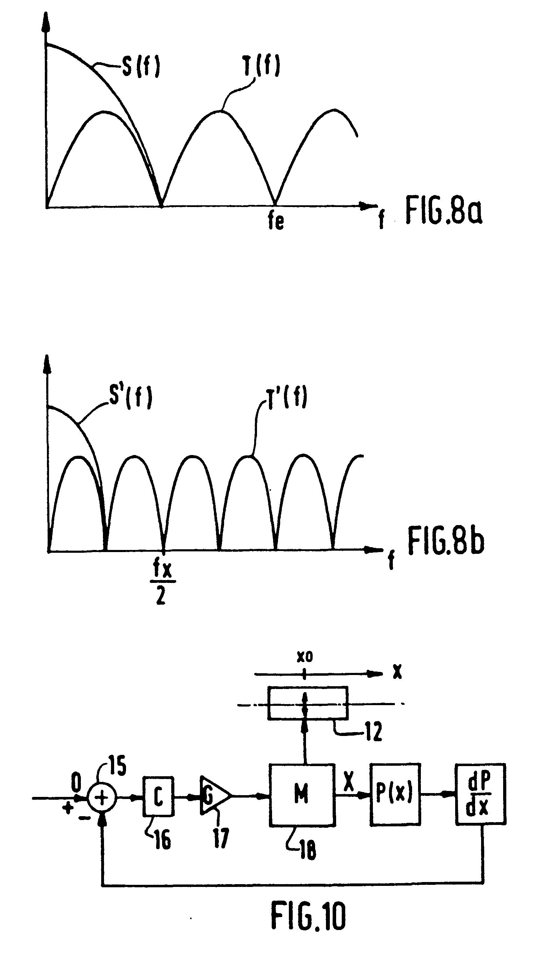

Comme on peut le voir aux figures 8a et 8b, un avantage de l'invention est qu'il est possible d'ajuster aux faibles signaux la bande passante des filtres numériques constitués par les opérateurs de dérivation ci-dessus dont la fonction de transfert T(f) est du type | sin $2\pi f/f_e$ | où $f_e$ est la fréquence d'échantillonnage. La figure 8a représente la fonction T(f) ainsi que le spectre S(f) d'une image bien focalisée. La figure 8b montre que l'on peut diviser la fréquence d'échantillonnage, par exemple par 2, de façon à l'adapter au signal S'(f) correspondant à une image défocalisée.

L'invention n'est pas limitée aux seuls opérateurs de dérivation définis ci-dessus, elle peut en effet mettre en oeuvre d'autres opérateurs du même type, tels que les filtres numériques connus sous le nom de filtres de Sobel qui prennent la forme de la matrice

$$\begin{bmatrix} 1 & 0 & -1 \\ 2 & 0 & -2 \\ 1 & 0 & -1 \end{bmatrix}$$

pour le calcul des dérivées horizontales et de la matrice

$$\begin{bmatrix} 1 & 2 & 1 \\ 0 & 0 & 0 \\ -1 & -2 & -1 \end{bmatrix}$$

pour le calcul des dérivées verticales.

Après détermination du paramètre de qualité P (P valant P1 ou P2), celui-ci est utilisé pour commander par asservissement la position de l'objectif 12 de l'appareil de prise de vue 11 de façon à obtenir la valeur maximale dudit paramètre de qualité P. Conformément aux figures 1 et 7, on appellera X la variable donnant la position de l'objectif et Xo la valeur de cette variable correspondant à la focalisation parfaite. Comme l'indique la figure 9a, le paramètre de qualité P est une fonction de X passant par un maximum PM pour X = Xo.

Un mode d'asservissement consiste, d'abord, à échantillonner la courbe de la figure 9a représentant les variations du paramètre de qualité P avec la position X de l'objectif de l'appareil de prise de vue. Cet échantillonnage permet de déterminer le coefficient k figurant dans l'équation de la parabole osculatrice:

$$P = -k(X - Xo)^2 + PM$$

donnant l'évolution du paramètre P autour de xo. Les opérations d'échantillonnage, de calcul de la meilleure parabole et l'extraction de k peuvent être effectués par un calculateur. Il est alors possible de maintenir la poition X de l'objectif à la position Xo par asservissement linéaire en utilisant comme fonction d'erreur la dérivée

$$\frac{dP}{dX}$$

du paramètre P en fonction de X:

$$\frac{dP}{dX} = -2k(X - Xo)$$

Cette droite est montrée à la figure 9b.

Un schéma d'un circuit d'asservissement linéaire mettant en oeuvre le procédé selon l'invention est représenté sur la figure 10. La dérivée

$$\frac{dP}{dX}$$

est comparée à la valeur de consigne 0 par un comparateur 15 qui fournit une tension d'erreur. Le comparateur 15 est suivi d'un correcteur 16, d'un amplificateur 17 de gain G qui commande un moteur 18 de focalisation. Pour chaque position X de l'objectif 12, le circuit de la figure 10 calcule P et sa dérivée par rapport à X.

L'invention ne saurait être limitée au seul asservissement linéaire ci-dessus décrit, il est clair qu'elle peut être mise en oeuvre par tout type d'asservissement connu même non linéaire.

**Revendications**

1. Procédé de focalisation automatique d'un appareil de prise de vue muni d'un objectif et fournissant une image numérique, caractérisé en ce qu'il consiste à analyser l'image, à l'intérieur d'une fenêtre, à l'aide d'au moins un opérateur numérique donnant, pour une trame, les valeurs de la dérivée première spatiale, dites valeurs, dans une direction donnée, du signal numérique de l'image, puis à prendre les valeurs absolues de ces dérivées premières, et, enfin, à calculer un paramètre de qualité défini par la somme, dans ladite fenêtre, desdites valeurs absolues des dérivées premières, et en ce qu'on commande par asservissement la position de l'objectif de l'appareil de prise de vue de façon à obtenir la valeur maximale dudit paramètre de qualité.

2. Procédé de focalisation automatique d'un appareil de prise de vue muni d'un objectif et fournissant une image numérique, caractérisé en ce qu'il consiste à analyser l'image, à l'intérieur d'une fenêtre, à l'aide d'au moins un opérateur numérique donnant, pour une trame, les valeurs de la dérivée première spatiale, dites valeurs, dans une direction donnée, du signal numérique de l'image, puis à prendre les valeurs absolues de ces dérivées premières, et, ensuite, à calculer, à l'intérieur de la même fenêtre et à l'aide du même opérateur numérique, les dérivées, dites dérivées secondaires, desdites valeurs absolues des dérivées premières et à en prendre les valeurs absolutes, et, enfin, à calculer un paramètre de qualité défini par la somme, dans ladite fenêtre, des valeurs absolues des dérivées secondaires, et en ce qu'on commande par asservissement la position de l'objectif de l'appareil de prise de vue de façon à obtenir la valeur maximale dudit paramètre de qualité.

3. Procédé de focalisation automatique selon l'une des revendications 1 ou 2, caractérisé en ce que ledit opérateur numérique est un opérateur de dérivation horizontale [+1, −1] appliqué le long d'une ligne de la trame.

4. Procédé de focalisation automatique selon l'une des revendications 1 ou 2, caractérisé en ce que, les lignes de trame étant entrelacées, ledit opérateur numérique est un opérateur de dérivation horizontale [+1, 0, −1] appliquè le long d'une ligne de la trame.

5. Procédé de focalisation automatique selon l'une des revendications 1 ou 2, caractérisé en ce que ledit opérateur numérique est un opérateur de dérivation verticale

$$\begin{bmatrix} -1 \\ +1 \end{bmatrix}$$

appliqué perpendiculairement aux lignes de la trame.

6. Procédé de focalisation automatique selon la revendication 5 et l'une des revendications 3 ou 4, caractérisé en ce qu'un opérateur numérique de dérivation horizontale et un opérateur numérique de dérivation verticale sont simultanément appliqués à l'image, à l'intérieur de ladite fenêtre.

7. Procédé de focalisation automatique selon l'une quelconque des revendications 1 à 6, caractérisé en ce que les valeurs absolues des dérivées premières et secondaires sont comparées à des seuils respectifs, avec conservation des valeurs absolues desdites dérivées lorsqu'elles dépassent lesdits seuils.

8. Procédé de focalisation automatique selon l'une quelconque des revendications 1 à 7, caractérisé en ce que, par échantillonnage de la courbe représentant les variations du paramètre de qualité P avec la position X de l'objectif de l'appareil de prise de vue, on détermine le coefficient k figurant dans l'équation de la parabole osculatrice:

$$P = -k(X - Xo)^2 + PM$$

donnant l'évolution du paramètre P autour de Xo, et en ce qu'on asservit de façon linéaire la position X de l'objectif sur la position Xo en utilisant comme signal d'erreur la dérivée

$$\frac{dP}{dX}$$

du paramètre P en fonction de X:

$$\frac{dP}{dX} = -2k(X - Xo)$$

9. Procédé de focalisation automatique selon l'une des revendications 1 à 8, caractérisé en ce que l'on divise la fréquence d'échantillonnage de façon à l'adapter à la focalisation d'une image défocalisée.

10. Caméra vidéo appropriée pour le procédé de focalisation automatique selon l'une des revendications 1 à 9.

**Patentansprüche**

1. Verfahren zur automatischen Fokussierung eines Bildaufnahmegerätes, das mit einem Objektiv versehen ist und ein digitales Bild liefert, dadurch gekennzeichnet, daß das Verfahren die nachfolgenden Verfahrensschritte aufweist: das Analysieren des Bildes innerhalb eines Fensters mit Hilfe wenigstens eines digitalen Verarbeitungselementes, das für ein Teilbild die Werte der ersten räumlichen Abgeleiteten gibt, die in einer gegebenen Richtung, als Werte des digitalen Bildsignals bezeichnet werden, daraufhin das Aufnehmen des Absolutwerte dieser ersten Abgeleiteten und, zum Schluß, das Berechnen eines Qualitätsparameters, das durch die Summe, in dem Fenster, der genannten Absolutwerte der ersten Abgeleiteten bestimmt wird, und daß durch ein Regelungssystem die Lage des Objektivs des Bildaufnahmegerätes derart gesteuert wird, daß der Maximalwert des genannten Qualitätsparameters erhalten wird.

2. Verfahren zur automatischen Fokussierung eines Bildaufnahmegerätes das mit einem Objektiv versehen ist und ein digitales Bild liefert, dadurch gekennzeichnet, daß das Verfahren die nachfolgenden Verfahrensschritte aufweist: das Analysieren des Bildes innerhalb eines Fensters mit Hilfe wenigstens eines digitalen Verarbeitungselementes, das für ein Teilbild die Werte der ersten räumlichen Abgeleiteten gibt, die in einer gegebenen Richtung, als Werte des digitalen Bildsignals bezeichnet werden, daraufhin das Aufnehmen des Absolutwerte dieser ersten Abgeleiteten und, danach, das Berechnen, innerhalb desselben Fensters und mit Hilfe desselben digitalen Verarbeitungselementes, der als zweite Abgeleitete bezeichneten Abgeleiteten der genannten Absolutwerte der ersten Abgeleiteten, sowie das Aufnehmen der Absolutwerte, und, zum Schluß, das Berechnen eines Qualitätsparameters, das durch die Summe, in dem genannten Fenster, der Absolutwerte der zweiten Abgeleiteten bestimmt wird, und daß durch ein Regelungssystem die Lage des Objektivs des Bildaufnahmegerätes derart gesteuert wird, daß der Maximalwert des genannten Qualitätsparameters erhalten wird.

3. Verfahren zur automatischen Fokussierung nach einem der Ansprüche 1 oder 2, dadurch gekennzeichnet, daß das genannte digitale Verarbeitungselement ein Horizontal-Ablenkelement [+1, −1] ist, das in der Zeilenrichtung des Teilbildes angewandt wird.

4. Verfahren zur automatischen Fokussierung nach einem der Ansprüche 1 oder 2, dadurch gekennzeichnet, daß beim Bildaufbau das Zeilensprungverfahren angewandt wird, wobei das genannte digitale Verarbeitungselement ein Horizontal-Ablenkelement [+1, 0, −1] ist, das in Zeilenrichtung des Teilbildes angewandt wird.

5. Verfahren zur automatischen Fokussierung nach einem der Ansprüche 1 oder 2, dadurch gekennzeichnet, daß das genannte digitale Verarbeitungselement ein Vertikal-Ablenkelement

$$\begin{bmatrix} -1 \\ +1 \end{bmatrix}$$

ist, das senkrecht zu den Bildzeilen angewandt wird.

6. Verfahren zur automatischen Fokussierung nach Anspruch 5 und einem der Ansprüche 3 oder 4,

7

dadurch gekennzeichnet, daß ein digitales Horizontal-Ablenkelement und ein digitales Vertikal-Ablenkelement innerhalb des Fensters gleichzeitig angewandt werden.

7. Verfahren zur automatischen Fokussierung nach einem der Ansprüche 1 bis 6, dadurch gekennzeichnet, daß die Absolutwerte der ersten und zweiten Abgeleiteten mit entsprechenden Schwellen verglichen werden unter Beibehaltung der Absolutwerte der genannten Abgeleiteten, wenn diese die genannten Schwellen überschreiten.

8. Verfahren zur automatischen Fokussierung nach einem der Ansprüche 1 bis 7, dadurch gekennzeichnet, daß durch Abstastung der Kurve, welche die Abweichungen des Qualitätsparameters P gegenüber der Lage X des Objektivs des Bildaufnahmegerätes darstellt, der Koeffizient k bestimmt wird, der in der Gleichung der Krümmungsparabel auftritt:

$$P = -k(X - Xo)^2 + PM$$

welche die Entwicklung des Parameters P um Xo gibt, und daß auf lineare Weise die Lage X des Objektivs zu der Lage Xo hin gesteuert wird, und zwar unter Anwendung, als Fehlersignal, der Abgeleiteten dP/dX des Parameters P als Funktion von X:

$$dP/dX = -2K(X - Xo)$$

9. Verfahren zur automatischen Fokussierung nach einem der Ansprüche 1 bis 8, dadurch gekennzeichnet, daß die Abtastfrequenz derart aufgeteilt wird, daß sie geeignet gemacht wird zum Fokussieren eines unscharfen Bildes.

10. Video-Kamera zum Durchführen des Verfahrens zur automatischen Fokussierung nach einem der Ansprüche 1 bis 9.

**Claims**

1. A method of automatic focussing of a video pick-up device having an objective and producing a digital image, characterized in that the method consists of analysing the image, within a window, with the aid of at least one digital operator giving, for a field, the values of the spatial first derivative referred to as values, in a given direction, of the digital signal of the image, taking thereafter the absolute values of these first derivatives and, finally, calculating a quality parameter defined by the sum, in said window, of said absolute values of the first derivatives, and in that by means of a control the position of the objective lens of the pick-up device is controlled so as to obtain the maximum value of said quality parameter.

2. A method of automatic focussing of a video pick-up device having an objective and producing a digital image, characterized in that it consists of analysing the image, within a window, with the aid of at least one digital operator giving, for a field, the values of the spatial first derivative referred to as values in a given direction, of the digital signal of the image, taking thereafter the absolute values of these first derivatives, and, thereafter calculating, within the same window and by means of the same digital operator, the so-called secondary derivatives of said absolute values of the first derivatives and taking therefrom the absolute values, and, finally, calculating a quality parameter defined by the sum, in said window, of the absolute values of the secondary derivatives, and in that by means of a control the position of the objective lens of the pick-up device is controlled so as to obtain the maximum value of said quality parameter.

3. A method of automatic focussing as claimed in one of the Claims 1 or 2, characterized in that said digital operator is a horizontal derivative operator [+1, −1] applied along a line of a field.

4. A method of automatic focussing as claimed in one of the Claims 1 or 2, characterized in that, the field lines being interlaced, said digital operator is a horizontal derivative operator [+1, 0, −1] applied along a line of a field.

5. A method of automatic focussing as claimed in one of the Claims 1 or 2, characterized in that said digital operator is a vertical derivative operator

$$\begin{bmatrix} -1 \\ +1 \end{bmatrix}$$

applied perpendicularly to the lines of the field.

6. A method of automatic focussing as claimed in Claim 5 and one of the Claims 3 or 4, characterized in that a digital horizontal derivative operator and a digital vertical derivative operator are simultaneolusly applied to the image, within said window.

7. A method of automatic focussing as claimed in any one of the Claims 1 to 6, characterized in that the absolute values of the first and secondary derivatives are compared with respective thresholds, maintaining the absolute values of said derivatives when they exceed said thresholds.

8. A method of automatic focussing as claimed in any one of the Claims 1 to 7, characterized in that by sampling the curve representing the variations of the quality parameter P versus the position X of the objective of the pick-up device, the coefficient k is determined which occurs in the equation of the osculatory parabola:

$$P = -k(X - Xo)^2 + PM$$

giving the development of the parameter P around Xo, and in that the position X of the objective is controlled in a linear way to the position of Xo, utilizing as the error signal the derivative

$$\frac{dP}{dX}$$

of the parameter P as a function of X:

$$\frac{dP}{dX} = -2k(X - Xo)$$

9. A method of automatic focussing as claimed in any one of the Claims 1 to 8, characterized in that the sampling frequency is divided so as to adapt it to focussing an out-of-focus image.

10. A video camera suitable for the automatic focussing method as claimed in any one of the Claims 1 to 9.

FIG.1

FIG.2

$$P1 = \sum \left| \frac{df}{du} \right|$$
$$= \int \left| \frac{df}{du} \right| du = 2H$$

$$P2 = \sum \left| \frac{d}{du} \left| \frac{df}{du} \right| \right|$$
$$= \int \left| \frac{d}{du} \left| \frac{df}{du} \right| \right| du = (m+m')$$

P1=2H
P1'= 2H'<P   FIG.3

P1=P1'=H
P2'= 2m'<P2=2m   FIG.4

1

FIG.5

FIG.6

$$P \simeq -k(x-x_0)^2 + PM$$

FIG.9a

FIG.9b

$$-\frac{dP}{dX} \simeq -2k(x-x_0)$$

2

FIG.7

FIG.8a

FIG.8b

FIG.10